# EUROPÄISCHE PATENTSCHRIFT

(11) **EP 2 674 656 B1**
(45) Veröffentlichungstag und Bekanntmachung des Hinweises auf die Patenterteilung: **10.08.2016**
(21) Anmeldenummer: 12004486.2
(22) Anmeldetag: 14.06.2012
(51) Int. Cl.: F16L 23/08

(54) **Profilschelle**
Profile clamp
Bride de fixation

(43) Veröffentlichungstag der Anmeldung: 18.12.2013
(73) Patentinhaber: NORMA Germany GmbH, 63477 Maintal (DE)
(72) Erfinder: Kayacik,Erkan, 34841, Maltepe, Istanbul (TR); Baudoin,Manuel, Newbury RG14 7 QD (GB); Heywood, Jonathan, 63546 Hammersbach (DE)
(74) Vertreter: Patentanwälte Olbricht Buchhold Keulertz

(56) Entgegenhaltungen:
- EP-A2- 1 840 439
- GB-A- 2 094 385
- GB-A- 2 446 813
- US-B1- 6 464 268

## Beschreibung

Die Erfindung betrifft eine Profilschelle zum Verbinden zweier Rohre oder Rohrabschnitte miteinander, die an ihren zu verbindenden Enden radial nach außen weisende Flansche aufweisen, mit einer ersten Halbschale, die an einem ersten Umfangsende einen ersten Spannkopf und an einem zweiten Umfangsende eine erste Verbindungsgeometrie aufweist, und mit einer zweiten Halbschale, die an einem ersten Umfangsende einen zweiten Spannkopf und an einem zweiten Umfangsende eine zweite Verbindungsgeometrie aufweist, wobei die erste Verbindungsgeometrie und die zweite Verbindungsgeometrie in einem einbaubereiten Zustand miteinander in Eingriff stehen und eine Gelenkverbindung bilden, und die Profilschelle einen Nenndurchmesser entsprechend einem Nenndurchmesser eines Flansches der Rohre aufweist.

Eine Profilschelle dient dazu, zwei Rohre oder Rohrabschnitte miteinander zu verbinden, die an ihren zu verbindenden Enden radial nach außen weisende Flansche aufweisen. Diese Flansche haben vielfach eine Konusform. Die Profilschelle greift mit radial nach innen ragenden Schenkeln über die Flansche der Rohrabschnitte. Beim Spannen der Profilschelle werden die Flansche dann aufeinander zugezogen.

Eine Profilschelle ist beispielsweise aus DE 198 82 234 T1 bekannt. Die Verbindungsgeometrie an der ersten Halbschale ist gebildet durch eine Art Haken, in die ein radial ausgebogener Endausschnitt der zweiten Halbschale eingesetzt werden kann, um die beiden Halbschalen an ihren zweiten Umfangsenden miteinander zu verbinden. Eine Spannschraube, die durch die beiden Spannköpfe geführt ist, verbindet die beiden Halbschalen dann am anderen Ende. Diese Anordnung soll die Montage erleichtern. Die beiden Halbschalen können nämlich vor der Montage, also im einbaubereiten Zustand, durch die Spannschraube miteinander verbunden sein. Um die Profilschelle über die Flansche der zu verbindenden Rohrenden zu führen, wird die Verbindungsgeometrie gelöst und erst wieder hergestellt, wenn die Profilschelle ihre Einbauposition erreicht hat.

Eine Profilschelle der eingangs genannten Art ist aus US 6 464 268 B1 bekannt. Diese Profilschelle weist zwei Halbschalen auf, von denen die erste an einem Ende mit einem Schlitz versehen ist, durch den eine Verlängerung der anderen Halbschale geführt ist. Diese Verlängerung ist wieder auf die andere Schale zurückgebogen und bildet somit eine Öse, in der ein den Schlitz der ersten Halbschale begrenzender Steg frei drehbar ist. Dementsprechend können die beiden Halbschalen praktisch unbegrenzt auseinandergeschenkt werden.

EP 1 840 439 A2 beschreibt eine Klemmeinrichtung mit zwei halbkreisförmigen Elementen, die zwischen einer Öffnungsstellung und einer Klemmstellung relativ zueinander bewegbar sind. Die beiden Elemente sind an einem Ende durch einen Schraubbolzen miteinander verbunden. Am gegenüberliegenden Ende ist ein Verbindungselement vorgesehen, das zwei Schlitze aufweist. Durch jeden dieser Schlitze ist ein ösenartig umgebogenes Ende der jeweiligen Elemente geführt. Die beiden Elemente werden durch eine Feder in eine Richtung aufeinander zu vorgespannt.

GB 2 094 385 A zeigt eine Schelle mit zwei Halbschalen, die jeweils einen V-förmigen Querschnitt aufweisen. Jede Halbschale weist zwei Umfangsenden auf. Die ersten Umfangsenden werden jeweils von einem Spannkopf gebildet. Das zweite Umfangsende der einen Halbschale ist hakenförmig abgebogen. Das zweite Umfangsende der anderen Halbschale weist einen Schlitz auf, durch den das hakenförmig abgebogene Ende eingeführt werden kann. Wenn die beiden Halbschalen auseinandergeklappt werden, besteht die Gefahr, dass sich die beiden Halbschalen voneinander lösen.

GB 2 446 813 A zeugt eine weitere Profilschelle mit zwei Halbschalen, die an ihren ersten Umfangsenden Spannköpfe aufweisen, die durch einen Bolzen miteinander verbunden werden können. Am anderen Ende sind die beiden Halbschalen durch eine Federbrücke miteinander verbunden, die die beiden Halbschalen in eine Öffnungsstellung vorspannt.

Der Erfindung liegt die Aufgabe zugrunde, die Montage einer Profilschelle einfach zu gestalten.

Diese Aufgabe wird bei einer Profilschelle der eingangs genannten Art dadurch gelöst, dass die Gelenkverbindung einen durch die Gelenkverbindung begrenzten maximalen Öffnungswinkel aufweist, der so dimensioniert ist, dass die beiden Halbschalen nur so weit auseinandergeklappt werden können, dass die Öffnung zwischen den Halbschalen dem Nenndurchmesser der Flansche entsprechen, so dass die Halbschalen in Axialrichtung über einen Flansch mit dem Nenndurchmesser hinweg bewegbar sind.

Mit einer derartigen Profilschelle ist praktisch eine einhändige Montage möglich. Die beiden Halbschalen werden an der Gelenkverbindung auseinandergeklappt. Die Gelenkverbindung bildet also eine Art Scharnier mit einer relativ klar definierten Schwenkachse. Diese Schwenkachse verläuft parallel zur Axialrichtung der Profilschelle, d.h. die beiden Halbschalen bleiben im Übrigen zueinander ausgerichtet. Der Monteur kann nun die auseinandergeklappten Halbschalen über die Rohre führen und dann mit einer Hand zusammen klappen, so dass eine Verbindung im Bereich der Spannköpfe der beiden Halbschalen ohne Weiteres hergestellt werden kann. Gegebenenfalls ist nach erfolgter Platzierung der Profilschelle dann eine zweite Hand des Monteurs erforderlich, um eine Spannschraube mit den beiden Spannköpfen zu verbinden. Der einbaubereite Zustand ist der Zustand, mit dem die Profilschelle an ihrem Einsatzort platziert wird. Dieser einbaubereite Zustand kann mit einem Anlieferungszustand übereinstimmen.

Für die Montage der Profilschelle sind zwei Schritte erforderlich. Zunächst muss die Profilschelle über einen Bereich eines der zu verbindenden Rohre außerhalb der Flansche geführt werden. Dies ist ohne weiteres möglich, weil das Rohr hier einen kleineren Durchmesser als im Bereich seines Flansches aufweist. Danach wird die Profilschelle axial verschoben, bis sie über den Flanschen der zu verbindenden Rohre positioniert ist. Danach kann man die beiden Halbschalen zusammenklappen. Der Vorteil liegt allerdings darin, dass der Öffnungswinkel klein gehalten werden kann, was die Handhabung erleichtert.

Bevorzugterweise weist die erste Verbindungsgeometrie eine ringförmig geformte Schlaufe, die mit der ersten Halbschale verbunden ist und die zweite Verbindungsgeometrie einen Schlitz im Bereich des Umfangsendes der zweiten Halbschale auf, durch den die Schlaufe geführt ist, wobei ein Endbereich zwischen dem Schlitz und dem zweiten Umfangsende der zweiten Halbschale in der Schlaufe nur bis zu einer vorbestimmten Grenzwinkellage verschwenkbar ist. Die Begrenzung des Öffnungswinkels wird also durch die Gelenkverbindung selbst realisiert. Der Endabschnitt ist in der Schlaufe nur in einem begrenzten Winkelbereich bewegbar. In der Grenzwinkellage kommt er zur Anlage an die Innenseite der Schlaufe, so dass er nicht weiter gekippt oder verschwenkt werden kann. In eine Richtung weg von der Grenzwinkellage ist aber ein Verkippen oder Verschwenken ohne weiteres möglich, so dass die beiden Halbschalen mit ihren Spannköpfen wieder aufeinander zu bewegt werden können, wenn die Profilschelle an Ort und Stelle positioniert ist.

Hierbei ist bevorzugt, dass die Schlaufe rechteckartig ausgebildet ist und in eine erste Richtung eine größere Erstreckung als in eine zweite Richtung senkrecht zur ersten Richtung aufweist, wobei der Endabschnitt in Umfangsrichtung länger als die Erstreckung in die zweite Richtung ist. Der Begriff "rechteckartig" ist hier nicht im mathematisch engen Sinne zu verstehen. Das Rechteck kann durchaus abgerundete Ecken aufweisen. Auch ist es nicht erforderlich, dass jeweils zwei Seiten exakt parallel zu einander verlaufen. Vielmehr ist es auch möglich, dass die Seiten der Schlaufe in gewissen Grenzen gekrümmt ausgebildet sind. Wesentlich ist, dass der Endabschnitt bei einer derartigen Schlaufe eine klar definierte Grenzwinkellage einnehmen kann, über die hinaus er nicht bewegbar ist.

Hier wird bevorzugt, dass sich die erste Richtung in Umfangsrichtung erstreckt. Dies erleichtert die Montage.

Vorzugsweise ist der Endabschnitt kleiner als eine Diagonale der Schlaufe. Damit steht für den Endabschnitt innerhalb der Schlaufe ein ausreichend großer Bewegungsspielraum zur Verfügung.

Vorzugsweise ist die Schlaufe einstückig mit der ersten Halbschale ausgebildet. Dies vereinfacht die Herstellung der Halbschale. Man kann die Halbschale beispielsweise aus einem Metall bilden und beim Ausstanzen und Biegen das Material für die Schlaufe stehen lassen. Die Verbindung zwischen der Schlaufe und der Halbschale bekommt dadurch eine ausreichende Festigkeit.

Vorzugsweise weist die erste Halbschale eine Basis und zwei von der Basis radial nach innen weisende Schenkel auf, wobei sich die Schlaufe aus der Basis fortsetzt. Da das Material, aus dem die Schlaufe gebildet ist, keine Schenkel aufweist, ist es leicht verformbar, so dass die Schlaufe mit geringem Aufwand ausgebildet werden kann.

Vorzugsweise weist die zweite Halbschale eine Basis und zwei von der Basis radial nach innen weisende Schenkel auf, wobei die Schlaufe in Axialrichtung eine geringere Breite als die Basis der zweiten Halbschale aufweist. Damit ist es möglich, den Schlitz ausschließlich in der Basis der zweiten Halbschale auszubilden, so dass die zweite Halbschale durch den Schlitz nicht nennenswert geschwächt wird.

Vorzugsweise weist das zweite Umfangsende der zweiten Halbschale eine Verbreiterung auf. Damit lässt sich ausreichend Material zur Verfügung stellen, so dass die Profilschelle mit einer ausreichenden Spannkraft angezogen werden kann, ohne das Material der Profilschelle zu überlasten.

Vorzugsweise sind die Schenkel der zweiten Halbschale im Bereich der Verbreiterung am Umfangsende der ersten Halbschale vorbeiführbar. Damit ergibt sich eine ausreichende Beweglichkeit der beiden Halbschalen im Bereich der Gelenkverbindung auch dann, wenn hier nur ein kleiner Abstand zwischen den Halbschalen in Umfangsrichtung vorgesehen ist. Der Öffnungswinkel wird dann ausschließlich durch die Ausbildung der Gelenkverbindung begrenzt.

Vorzugsweise weist einer der beiden Spannköpfe eine Rasteinrichtung auf, die am anderen Spannkopf einrastbar ist. In diesem Fall lässt sich die Montage der Profilschelle bis zu einem gewissen Stadium vollständig mit einer Hand durchführen. Der Monteur führt die beiden Halbschalen zunächst über das Rohr, dann über die Flansche und klappt sie danach zusammen, wobei die Spannköpfe miteinander verrastet werden. Erst dann muss der Monteur ein Spannelement einsetzen, beispielsweise eine Schraube. Dies kann gegebenenfalls ebenfalls mit einer Hand erfolgen, sodass der zur Montage notwendige Bauraum klein gehalten werden kann.

In einer bevorzugten Ausgestaltung wirkt eine Öffnungsfeder zwischen den beiden Halbschalen in eine Öffnungsrichtung. Die Öffnungsfeder bewirkt, dass die beiden Halbschalen mit ihren Spannköpfen voneinander weg geschwenkt werden, bis der maximale Öffnungswinkel erreicht ist. Dies bedeutet eine weitere Erleichterung bei der Handhabung der Profilschelle, wenn diese montiert wird. Wenn der Monteur die Profilschelle ergreift, ist sie bereits im geöffneten Zustand und bleibt in diesem geöffneten Zustand, bis der Monteur eine Kraft auf die Halbschalen wirken lässt, die die Kraft der Öffnungsfeder überwindet. Diese Kraft wird der Monteur erst dann aufbringen, wenn die Profilschelle in der gewünschten Montageposition positioniert worden ist. Die Öffnungsfeder muss dabei nicht übermäßig stark dimensioniert werden, so dass die Kraft, die der Monteur beim Zusammendrücken der beiden Halbschalen aufbringen muss, ebenfalls begrenzt ist.

Vorzugsweise weist die Öffnungsfeder zwei auf die Halbschalen wirkende, in die Öffnungsrichtung vorgespannte Arme auf. Dies ist eine relativ einfache Ausgestaltung. Die Öffnungsfeder kann beispielsweise als Drahtfeder oder als Blattfeder ausgebildet sein. Wenn sie als Drahtfeder ausgebildet ist, dann kann sie zwischen den beiden Armen beispielsweise einen gewendelten Abschnitt aufweisen, der die gewünschte Vorspannung in die Öffnungsrichtung erzeugt.

Die Erfindung wird im Folgenden anhand eines bevorzugten Ausführungsbeispiels in Verbindung mit einer Zeichnung beschrieben. Hierin zeigen:
Fig. 1 : eine Profilschelle im montierten Zustand,
Fig. 2 : die Profilschelle in einbaubereitem Zustand,
Fig. 3 : einen vergrößerten Ausschnitt aus Fig. 2,
Fig. 4 : die Profilschelle nach Fig. 1 mit Draufsicht auf eine Verbindungsgeometrie,
Fig. 5 : eine Profilschelle mit einer Öffnungsfeder und
Fig. 6 : die Profilschelle aus Fig. 5 mit Blick auf die Öffnungsfeder.

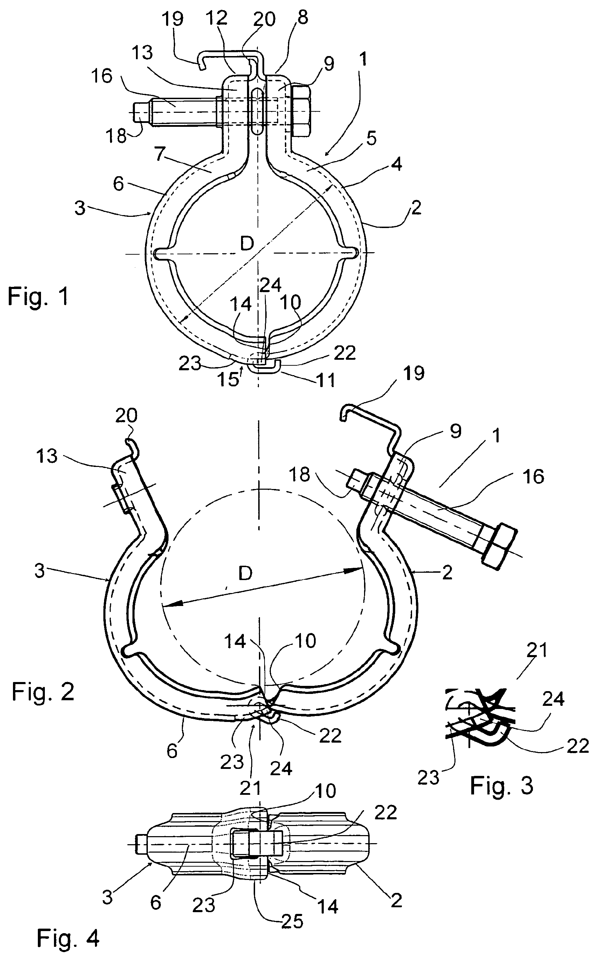

Fig. 1 zeigt eine Profilschelle 1 mit einer ersten Halbschale 2 und einer zweiten Halbschale 3. Die erste Halbschale 2 weist eine Basis 4 und von der Basis 4 radial nach innen ragende Schenkel 5 auf, von denen nur einer sichtbar ist. Die Basis 4 und die Schenkel 5 bilden zusammen im Querschnitt eine Art Trapez. Die zweite Halbschale ist ähnlich aufgebaut mit einer Basis 6 und zwei Schenkeln 7.

Die erste Halbschale 2 weist an einem ersten Umfangsende 8 einen ersten Spannkopf 9 und an einem zweiten Umfangsende 10 eine erste Verbindungsgeometrie 11 auf. Die zweite Halbschale 3 weist an ihrem ersten Umfangsende 12 einen zweiten Spannkopf 13 und an ihrem zweiten Umfangsende 14 eine zweite Verbindungsgeometrie 15 auf.

Die beiden Spannköpfe 9, 13 sind durch eine Schraube 16 miteinander verbunden. Die Schraube 16 ist durch den ersten Spannkopf 9 hindurchgeführt und in ein nicht näher dargestelltes Gewinde am zweiten Spannkopf 13 eingeschraubt. Ein O-Ring 17 dient als Verliersicherung, so dass die Schraube 16, wie in Fig. 2 zu erkennen ist, unverlierbar im ersten Spannkopf 9 gehalten ist.

Die Schraube 16 weist ein Ende 18 mit vermindertem Durchmesser auf, das das Einfädeln in den zweiten Spannkopf 13 erleichtert. Am ersten Spannkopf 9 ist ein Rasthaken 19 befestigt, der an einem Rastvorsprung 20, der mit dem zweiten Spannkopf 13 verbunden ist, einrasten kann, wenn die beiden Halbschalen 2, 3 aus ihrem in Fig. 2 dargestellten einbaubereiten Zustand aufeinander zu bewegt werden, wobei die Schraube 16 noch nicht mit dem zweiten Spannkopf 13 in Eingriff kommen muss.

Die Profilschelle 1 ist für einen Nenndurchmesser D vorgesehen, d.h. die Flansche der zu verbindenden Rohre weisen einen maximalen Durchmesser D auf. Die beiden Verbindungsgeometrien 11, 15 bilden zusammen eine Gelenkverbindung, so dass die beiden Halbschale 2, 3, wie in Fig. 2 dargestellt, auseinandergeklappt werden können. Die Gelenkverbindung durch die Verbindungsgeometrien 11, 15 bilden eine Art Scharnier, so dass die beiden Halbschalen 2, 3 nur in einer gemeinsamen Ebene verschwenkt werden können. Eine Bewegung der beiden Halbschalen 2, 3 relativ zu einander in eine andere Richtung ist praktisch nicht möglich oder nur in einem vernachlässigbaren Ausmaß.

Die durch die beiden Verbindungsgeometrien 11, 15 gebildete Gelenkverbindung 21 weist einen begrenzten Öffnungswinkel auf. Dieser Öffnungswinkel ist so dimensioniert, dass die beiden Halbschalen 2, 3 nur so weit auseinandergeklappt werden können, dass sie in Axialrichtung über dem Nenndurchmesser D hinweg bewegbar sind. Mit anderen Worten können die radialen Innenscheiten der Schenkel 5, 7 in axiale Richtung über den Nenndurchmesser D hinweg bewegt werden, wie dies durch den strichpunktiert gezeichneten Kreis in Fig. 2 kenntlich gemacht worden ist. Eine weitere Öffnung der beiden Halbschalen 2, 3 ist nicht erforderlich. Zur Montage werden die beiden Halbschalen 2, 3 in die in Fig. 2 dargestellte Position auseinander geklappt und über einen Rohrabschnitt geführt, der einen kleineren Durchmesser als der Flansch des Rohrabschnitts aufweist. Dementsprechend kann dieser Rohrabschnitt auch durch die engste Stelle geführt werden, die sich am radial inneren Ende der beiden Spannköpfe 9, 13 ergibt. Danach ist eine axiale Bewegung der Profilschelle 1 erforderlich, um die Profilschelle 1 über die Flansche hinweg zu bewegen. Sobald die Profilschelle in axiale Richtung ihre Montageposition erreicht hat, können die beiden Halbschalen 2, 3 zusammengeklappt werden. Diese Bewegung kann mit einer Hand erfolgen. Beim Zusammenklappen kann der Rasthaken 19 hinter dem Rastvorsprung 20 einhaken, so dass der Monteur eine Vorpositionierung der Profilschelle 1 erreicht hat, bei der lediglich noch das Einschrauben der Schraube 16 in den zweiten Spannkopf 13 erforderlich ist.

Die Gelenkverbindung 21 ist in vergrößertem Maßstab in Fig. 3 dargestellt. Daraus ist zu erkennen, dass die erste Verbindungsgeometrie 11 eine ringförmig geformte Schlaufe 22 aufweist, die im Wesentlichen rechteckartig ausgebildet ist. Die Schlaufe 22 weist also in Umfangsrichtung der Profilschelle 1 eine größere Erstreckung auf als in eine Richtung senkrecht dazu.

Die zweite Verbindungsgeometrie 15 weist einen Schlitz 23 in der Basis 6 der zweiten Halbschale 3 auf, durch den die Schlaufe 22 geführt ist. Zwischen dem Schlitz 23 und dem zweiten Umfangsende 14 der zweiten Halbschale 3 verbleibt ein Endabschnitt 24, der in der Schlaufe 22 in gewissen Grenzen verschwenkbar ist. Der Endabschnitt 24 kann, wie dies in Fig. 1 dargestellt ist, in der Schlaufe 22 etwa in Umfangsrichtung verschwenkt werden und er kann, wie dies in Fig. 2 und 3 zu erkennen ist, in der Schlaufe 22 bis zu einer vorbestimmten Grenzwinkellage verschwenkt werden. Diese Grenzwinkellage ergibt sich daraus, dass der Endabschnitt 24 in Umfangsrichtung der Profilschelle 1 länger ist als die Erstreckung der Schlaufe 22 in die Richtung senkrecht zur Umfangsrichtung. Der Endabschnitt 24 ist aber in jedem Fall kleiner als eine Diagonale der Schlaufe 22.

Die Schlaufe ist einstückig mit der ersten Halbschale 2 ausgebildet. Sie setzt sich aus der Basis 4 der ersten Halbschale 2 fort. Die Schlaufe 22 weist, wie dies in Fig. 4 zu erkennen ist, in Axialrichtung eine geringere Breite als die Basis 6 der zweiten Halbschale 3 auf.

Die zweiten Halbschale 3 weist im Bereich des zweiten Umfangsendes 14 eine Verbreiterung 25 auf, so dass hier genügend Material in der zweiten Halbschale 3 zur Verfügung steht, um die gewünschte Festigkeit erreichen zu können.

In Fig. 4 ist zu erkennen, dass die Schenkel 7 im Bereich der Verbreiterung am Umfangsende 10 der ersten Halbschale vorbeiführbar sind.

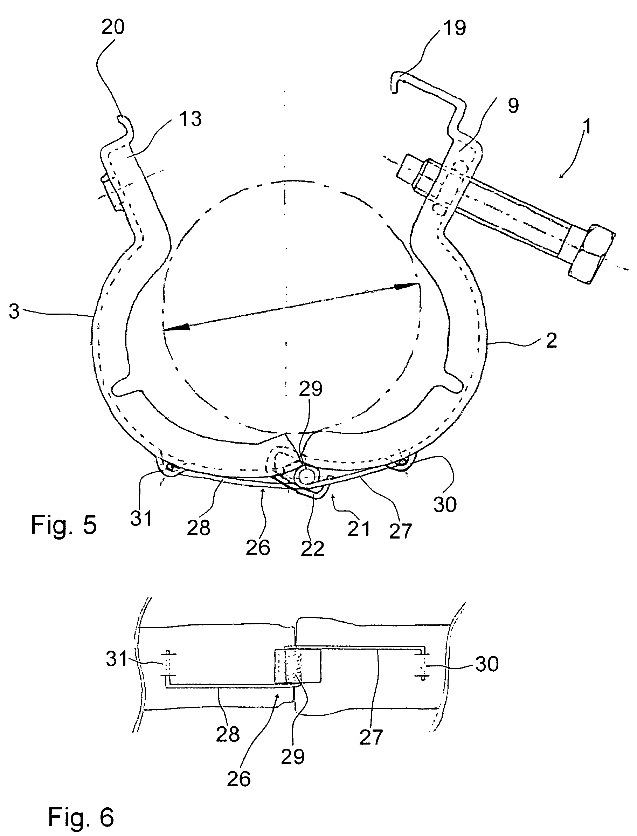

Fig. 5 zeigt eine weitere Ausführungsform einer Profilschelle 1, bei der gleiche Elemente mit den gleichen Bezugszeichen wie in den Fig. 1 bis 4 versehen sind.

Die Profilschelle 1 nach Fig. 5 weist eine Öffnungsfeder 26 auf, die zwischen den beiden Halbschalen 2, 3 angeordnet ist. Die Öffnungsfeder 26 ist im vorliegenden Fall als Drahtfeder mit zwei Armen 27, 28 ausgebildet. Zwischen den beiden Armen 27, 28 ist ein gewendelter Bereich 29 vorgesehen, der in der Schlaufe 22 angeordnet ist. Der gewendelte Bereich 29 spannt die beiden Arme 27, 28 in eine Öffnungsrichtung vor. Die Öffnungsrichtung ist dabei eine Richtung, in der sich die Spannköpfe 9, 13 voneinander entfernen, so dass die beiden Halbschalen 2, 3 ihren maximalen Öffnungswinkel einnehmen und die Profilschelle 1 sozusagen automatisch in den einbaubereiten Zustand versetzt wird.

Die Enden der Arme 27, 28 sind durch Laschen 30, 31 geführt, die aus den Halbschalen 2, 3 herausgebogen sind. Andere Befestigungen sind natürlich möglich.

Zweckmäßigerweise ist die Öffnungsfeder 26 außen an den Halbschalen 2, 3 angeordnet.

Anstelle der dargestellten Drahtfeder lässt sich natürlich auch eine andere Feder verwenden, beispielsweise eine Blattfeder. Bei der Verwendung einer Blattfeder ist man nicht unbedingt auf eine Anordnung an der radialen Außenseite der Halbschalen 2, 3 beschränkt.

Wie oben erläutert, versetzt die Öffnungsfeder 26 die Profilschelle 1 in den einbaubereiten Zustand, weil sie die beiden Halbschalen 2, 3 bis in den größtmöglichen Öffnungswinkel auseinanderdrückt. Der Öffnungswinkel wird durch die Gelenkverbindung 21 definiert. Der Monteur kann also die Profilschelle 1 ergreifen und im geöffneten Zustand an die gewünschte Einbauposition bringen. Danach ist es lediglich erforderlich, die beiden Halbschalen 2, 3 mit einer Kraft zu belasten, die der Kraft der Öffnungsfeder 26 entgegenwirkt, um den Rasthaken 19 mit dem Rastvorsprung 20 in Eingriff zu bringen. Dies ermöglicht ein sehr komfortables Arbeiten.

## Patentansprüche

1. Profilschelle zum Verbinden zweier Rohre oder Rohrabschnitte miteinander, die an ihren zu verbindenden Enden radial nach außen weisende Flansche aufweisen, mit einer ersten Halbschale (2), die an einem ersten Umfangsende (8) einen ersten Spannkopf (9) und an einem zweiten Umfangsende (10) eine erste Verbindungsgeometrie (11) aufweist, und mit einer zweiten Halbschale (3), die an einem ersten Umfangsende (12) einen zweiten Spannkopf (13) und an einem zweiten Umfangsende (14) eine zweite Verbindungsgeometrie (15) aufweist, wobei die erste Verbindungsgeometrie (11) und die zweite Verbindungsgeometrie (15) in einem einbaubereiten Zustand miteinander in Eingriff stehen und eine Gelenkverbindung (21) bilden und die Profilschelle einen Nenndurchmesser (D) entsprechend einem Nenndurchmesser eines Flansches der Rohre aufweist, **dadurch gekennzeichnet, dass** die Gelenkverbindung (21) einen durch die Gelenkverbindung (21) begrenzten maximalen Öffnungswinkel aufweist, der so dimensioniert ist, dass die beiden Halbschalen (2, 3) nur so weit auseinander geklappt werden können, dass die Öffnung zwischen den Halbschalen dem Nenndurchmesser der Flansche entsprechen, so dass die Halbschalen in Axialrichtung über einen Flansch mit dem Nenndurchmesser (D) hinweg bewegbar sind.

2. Profilschelle nach Anspruch 1, **dadurch gekennzeichnet, dass** die erste Verbindungsgeometrie (11) eine ringförmig geformte Schlaufe (22), die mit der ersten Halbschale (2) verbunden ist, und die zweite Verbindungsgeometrie (15) einen Schlitz (23) im Bereich des zweiten Umfangsendes (14) der zweiten Halbschale (3) aufweist, durch den die Schlaufe (22) geführt ist, wobei ein Endbereich (24) zwischen dem Schlitz (23) und dem zweiten Umfangsende (14) der zweiten Halbschale (3) in der Schlaufe (22) nur bis zu einer vorbestimmten Grenzwinkellage verschwenkbar ist.

3. Profilschelle nach Anspruch 2, **dadurch gekennzeichnet, dass** die Schlaufe (22) rechteckartig ausgebildet ist und in eine erste Richtung eine größere Erstreckung als in eine zweite Richtung senkrecht zur ersten Richtung aufweist, wobei der Endabschnitt (24) in Umfangsrichtung länger ist als die Erstreckung in die zweite Richtung.

4. Profilschelle nach Anspruch 3, **dadurch gekennzeichnet, dass** sich die erste Richtung in Umfangsrichtung erstreckt.

5. Profilschelle nach Anspruch 3 oder 4, **dadurch gekennzeichnet, dass** der Endabschnitt (24) kleiner ist als eine Diagonale der Schlaufe (22).

6. Profilschelle nach einem der Ansprüche 2 bis 5, **dadurch gekennzeichnet, dass** die Schlaufe (22) einstückig mit der ersten Halbschale (2) ausgebildet ist.

7. Profilschelle nach einem der Ansprüche 2 bis 6, **dadurch gekennzeichnet, dass** die erste Halbschale (2) eine Basis (4) und zwei von der Basis (4) radial nach innen weisende Schenkel (5) aufweist, wobei sich die Schlaufe (22) aus der Basis (4) fortsetzt.

8. Profilschelle nach Anspruch 7, **dadurch gekennzeichnet, dass** die zweite Halbschale (3) eine Basis (6) und zwei von der Basis radial nach innen weisende Schenkel (7) aufweist, wobei die Schlaufe (22) in Axialrichtung eine geringere Breite als die Basis (6) der zweiten Halbschale (3) aufweist.

9. Profilschelle nach Anspruch 7 oder 8, **dadurch gekennzeichnet, dass** das zweite Umfangsende (14) der zweiten Halbschale (3) eine Verbreiterung (25) aufweist.

10. Profilschelle nach Anspruch 9, **dadurch gekennzeichnet, dass** die Schenkel (7) der zweiten Halbschale (3) im Bereich der Verbreiterung (25) am zweiten Umfangsende (10) der ersten Halbschale (2) vorbeiführbar sind.

11. Profilschelle nach einem der Ansprüche 1 bis 10, **dadurch gekennzeichnet, dass** einer der beiden Spannköpfe (9, 13) eine Rasteinrichtung (19) aufweist, die am anderen Spannkopf (13, 9) einrastbar ist.

12. Profilschelle nach einem der Ansprüche 1 bis 11, **dadurch gekennzeichnet, dass** eine Öffnungsfeder (26) zwischen den beiden Halbschalen (2, 3) in eine Öffnungsrichtung wirkt.

13. Profilschelle nach Anspruch 12, **dadurch gekennzeichnet, dass** die Öffnungsfeder (26) zwei auf die Halbschalen (2, 3) wirkende, in die Öffnungsrichtung vorgespannte Arme (27, 28) aufweist.

## Claims

1. Profile clamp for connecting together two pipes or pipe sections which comprise radially outward facing flanges at the ends thereof which are to be connected together, comprising a first half-shell (2), which has a first clamping head (9) on a first circumferential end (8) and a first connection geometry (11) on a second circumferential end (10), and comprising a second half-shell (3), which has a second clamping head (13) on a first circumferential end (12) and a second connection geometry (15) on a second circumferential end (14), wherein the first connection geometry (11) and the second connection geometry (15) are engaged with each other in an installation-ready state and form a hinge connection (21) and the profile clamp has a nominal diameter (D) corresponding to a nominal diameter of a flange of the pipes, **characterised in that** the hinge connection (21) has a maximum opening angle limited by the hinge connection (21), which is dimensioned in such a way that the two half-shells (2, 3) can only be only be folded so far apart that the opening between the half-shells matches the nominal diameter of the flanges, such that the half-shells can be moved away in the axial direction over a flange having the nominal diameter (D).

2. Profile clamp according to claim 1, **characterised in that** the first connection geometry (11) comprises a ring-shaped loop (22) which is connected to the first half-shell (2), and the second connection geometry (15) comprises a slot (23) in the region of the second circumferential end (14) of the second half-shell (3), through which the loop (22) is guided, wherein an end section (24) between the slot (23) and the second circumferential end (14) of the second half-shell (3) can be pivoted in the loop (22) only as far as a predetermined limit angle position.

3. Profile clamp according to claim 2, **characterised in that** the loop (22) has a rectangular design and has a greater extension in a first direction than in a second direction perpendicular to the first direction, wherein the end section (24) in the circumferential direction is longer than the extension in the second direction.

4. Profile clamp according to claim 3, **characterised in that** the first direction extends in the circumferential direction.

5. Profile clamp according to claim 3 or 4, **characterised in that** the end section (24) is smaller than a diagonal of the loop (22).

6. Profile clamp according to one of claims 2 to 5, **characterised in that** the loop (22) is designed as a single piece with the first half-shell (2).

7. Profile clamp according to one of claims 2 to 6, **characterised in that** the first half-shell (2) comprises a base (4) and two legs (5) facing radially inwards from the base (4), wherein the loop (22) extends out from the base (4).

8. Profile clamp according to claim 7, **characterised in that** the second half-shell (3) comprises a base (6) and two legs (7) facing radially inwards from the base, wherein the loop (22) has a smaller width in the axial direction than the width of the base (6) of the second half-shell (3).

9. Profile clamp according to claim 7 or 8, **characterised in that** the second circumferential end (14) of the second half-shell (3) has a broadening (25).

10. Profile clamp according to claim 9, **characterised in that** the leg (7) of the second half-shell (3) can be guided past in the region of the broadening (25) on the second circumferential end (10) of the first half-shell (2).

11. Profile clamp according to one of claims 1 to 10, **characterised in that** one of the two clamping heads (9, 13) comprises a latching device (19) which can be latched on the other clamping head (13, 9).

12. Profile clamp according to one of claims 1 to 11, **characterised in that** an opening spring (26) acts between the two half-shells (2, 3) in an opening direction.

13. Profile clamp according to claim 12, **characterised in that** the opening spring (26) comprises two arms (27, 28) pretensioned in the opening direction and acting on the half-shells (2, 3).

## Revendications

1. Bride de fixation de profilé pour assembler deux tuyaux ou tronçons de tuyau qui comportent à leurs extrémités à assembler des collerettes pointant radialement vers l'extérieur, avec une première demi-coque (2), qui comporte une première tête de serrage (9) à une première extrémité périphérique (8) et une première géométrie d'assemblage (11) à une deuxième extrémité périphérique (10), et avec une deuxième demi-coque (3), qui comporte une deuxième tête de serrage (13) à une première extrémité périphérique (12) et une deuxième géométrie d'assemblage (15) à une deuxième extrémité périphérique (14), la première géométrie d'assemblage (11) et la deuxième géométrie d'assemblage (15) étant en prise l'une avec l'autre dans un état prêt pour le montage et formant une liaison articulée (21) et la bride de fixation de profilé ayant un diamètre nominal (D) correspondant à un diamètre nominal d'une collerette des tuyaux, **caractérisée en ce que** la liaison articulée (21) comporte un angle d'ouverture maximal qui est limité par la liaison articulée (21) et qui est dimensionné de telle sorte que les deux demi-coques (2, 3) ne peuvent être écartées l'une de l'autre que dans la mesure où l'ouverture entre les demi-coques correspond au diamètre nominal des collerettes de telle sorte que les demi-coques sont mobiles en direction axiale par-delà une collerette avec le diamètre nominal (D).

2. Bride de fixation de profilé selon la revendication 1, **caractérisée en ce que** la première géométrie d'assemblage (11) comporte une boucle (22) de forme annulaire qui est assemblée à la première demi-coque (2) et la deuxième géométrie d'assemblage (15) comporte une fente (23) dans la zone de la deuxième extrémité périphérique (14) de la deuxième demi-coque (3), fente par laquelle passe la boucle (22), une zone terminale (24) entre la fente (23) et la deuxième extrémité périphérique (14) de la deuxième demi-coque (3) pouvant pivoter dans la boucle (22) seulement jusqu'à une position angulaire limite prédéterminée.

3. Bride de fixation de profilé selon la revendication 2, **caractérisée en ce que** la boucle (22) est conçue rectangulaire et a dans une première direction une plus grande dimension que dans une deuxième direction perpendiculaire à la première direction, le tronçon terminal (24) dans la direction circonférentielle étant plus long que la dimension dans la deuxième direction.

4. Bride de fixation de profilé selon la revendication 3, **caractérisée en ce que** la première direction s'étend dans la direction circonférentielle.

5. Bride de fixation de profilé selon la revendication 3 ou 4, **caractérisée en ce que** le tronçon terminal (24) est plus petit qu'une diagonale de la boucle (22).

6. Bride de fixation de profilé selon l'une des revendications 2 à 5, **caractérisée en ce que** la boucle (22) est conçue d'un seul tenant avec la première demi-coque (2).

7. Bride de fixation de profilé selon l'une des revendications 2 à 6, **caractérisée en ce que** la première demi-coque (2) comporte une base (4) et deux branches (5) pointant radialement vers l'intérieur à partir de la base (4), la boucle (22) se prolongeant à partir de la base (4).

8. Bride de fixation de profilé selon la revendication 7, **caractérisée en ce que** la deuxième demi-coque (3) comporte une base (6) et deux branches (7) pointant radialement vers l'intérieur à partir de la base, la boucle (22) ayant dans la direction axiale une plus petite largeur que la base (6) de la deuxième demi-coque (3).

9. Bride de fixation de profilé selon la revendication 7 ou 8, **caractérisée en ce que** la deuxième extrémité périphérique (14) de la deuxième demi-coque (3) comporte un élargissement (25).

10. Bride de fixation de profilé selon la revendication 9, **caractérisée en ce que** les branches (7) de la deuxième demi-coque (3) dans la zone de l'élargissement (25) peuvent passer devant la deuxième extrémité périphérique (10) de la première demi-coque (2).

11. Bride de fixation de profilé selon l'une des revendications 1 à 10, **caractérisée en ce que** l'une des deux têtes de serrage (9, 13) comporte un dispositif à enclenchement (19) qui peut être enclenché sur l'autre tête de serrage (13, 9).

12. Bride de fixation de profilé selon l'une des revendications 1 à 11, **caractérisée en ce qu'**un ressort d'ouverture (26) agit dans une direction d'ouverture entre les deux demi-coques (2, 3).

13. Bride de fixation de profilé selon la revendication 12, **caractérisée en ce que** le ressort d'ouverture (26) comporte deux bras (27, 28) qui agissent sur les demi-coques (2, 3) et qui sont précontraints dans la direction d'ouverture.
